# EUROPÄISCHE PATENTSCHRIFT

(11) **EP 4 387 837 B1**
(45) Veröffentlichungstag und Bekanntmachung des Hinweises auf die Patenterteilung: **13.08.2025**
(21) Anmeldenummer: 22754452.5
(22) Anmeldetag: 04.08.2022
(51) Int. Cl.: B29C 73/16, B60S 5/04, H02J 50/12, H02J 50/50

(54) **DRUCKLUFTBEREITSTELLUNGSSYSTEM, INSBESONDERE ZUM BEREITSTELLEN VON LUFT FÜR REIFEN EINES KRAFTFAHRZEUGS**
COMPRESSED-AIR PROVIDING SYSTEM, IN PARTICULAR FOR PROVIDING AIR FOR TIRES OF A MOTOR VEHICLE
SYSTÈME DE FOURNITURE D'AIR COMPRIMÉ, EN PARTICULIER POUR FOURNIR DE L'AIR POUR DES PNEUS D'UN VÉHICULE AUTOMOBILE

(30) Priorität: 19.08.2021 DE 102021121488
(43) Veröffentlichungstag der Anmeldung: 26.06.2024
(73) Patentinhaber: Aircom Automotive Sp. z.o.o. Sp. K., 55-080 Pietrzykowice (PL)
(72) Erfinder: GSCHWENDER, Dominik, 8266 Steckborn (CH); BATYCKI, Grzegorz, 55-040 Bielany Wroclawskie (PL)
(74) Vertreter: DREISS Patentanwälte PartG mbB
(86) Internationale Anmeldenummer: PCT/EP2022/071950
(87) Internationale Veröffentlichungsnummer: WO 2023/020851

(56) Entgegenhaltungen:
- DE-A1- 102017 200 625
- DE-A1- 102018 209 846
- US-A1- 2018 186 197
- US-A1- 2019 023 091
- US-A1- 2020 070 450

## Beschreibung

Die Erfindung betrifft ein Druckluftbereitstellungssystem, insbesondere zum Bereitstellen von Luft für Reifen eines Kraftfahrzeugs.

Aus dem Stand der Technik sind Druckluftbereitstellungssysteme bekannt. Einerseits sind aus DE 10 2018 209 846 A1, US 2020/0070450 Al, US 2018/0186197 Al, DE 10 2017 200 625 A1 und US 2019/0023091 Al, welche ein Druckluftbereitstellungssystem gemäß dem Oberbegriff des Anspruchs 1 offenbaren, fest in ein Kraftfahrzeug integrierte Systeme bekannt. Die Systeme sehen vor, dass jeder Reifen bzw. jedes Rad mit einer dezentralen Befülleinrichtung versehen ist. Damit kann eine Druckregelung, also ein Aufpumpen bei normalem, rollendem Betrieb erfolgen, mit einer am Rad bzw. an der Felge angeordneten elektrisch betriebenen Pumpe zur Erzeugung des Luftdrucks. Andererseits existieren mobile Druckluftbereitstellungssysteme, die erst nach Bedarf mit dem jeweiligen Reifen verbunden werden.

Beispielsweise sind Druckluftbereitstellungssysteme bekannt, die über einen Dichtflüssigkeitsbehälter mit einem abzudichtenden Luftreifen verbindbar sind. Der Dichtflüssigkeitsbehälter wird beispielsweise mit einer Lufteinlassöffnung an einen Kompressor des Druckluftbereitstellungssystems angeschlossen und mit einer Auslassöffnung, über die ein Luft-/Dichtflüssigkeitsgemisches austreten kann, mit dem Reifen verbunden.

Der Kompressor, insbesondere ein Verdichter des Kompressors, wird beispielsweise mit einem Elektromotor angetrieben. Der Elektromotor wird üblicherweise über einen Versorgungsanschluss an eine mittels einer Fahrzeug-Batterie mit Strom versorgbaren Bordspannungssteckdose, die meist als Zigarettenanzünder genutzt wird, angeschlossen.

Diese Art von Bordspannungssteckdosen werden immer seltener in Fahrzeugen verbaut.

Die Aufgabe der vorliegenden Erfindung ist es, eine alternative Lösung zur Energieversorgung des Druckluftbereitstellungssystems vorzuschlagen.

Erfindungsgemäß wird bei einem Druckluftbereitstellungssystem mit einem Kompressor mit einem Elektromotor, und Mittel zum Verbinden des Druckluftbereitstellungssystems, insbesondere des Elektromotors, mit einer Energieversorgungsquelle zum Versorgen des Elektromotors mit elektrischer Energie, vorgeschlagen, dass das Mittel Mittel zur drahtlosen Energieübertragung umfasst.

Die Mittel zum Verbinden des Druckluftbereitstellungssystems, insbesondere des Elektromotors, mit einer Energieversorgungsquelle sind oder umfassen beispielsweise eine energieempfangende Einheit, engl. Power Receiving Unit, PRU.

Der Elektromotor wird über die Mittel zum Verbinden des Druckluftbereitstellungssystems, insbesondere des Elektromotors, mit der Energieversorgungsquelle, direkt mit Energie versorgt. Die übertragbare elektrische Energie wird also mittels der Mittel, beispielsweise der energieempfangenden Einheit direkt an den Elektromotor übertragen. Die Energie wird nicht in einer Batterie zwischengespeichert.

Erfindungsgemäß erfolgt die Energieübertragung also nicht drahtgebunden, sondern mittels induktiver Kopplung basierend auf dem magnetischen Fluss über elektromagnetische Felder.

Die Frequenz des elektromagnetischen Feldes liegt beispielsweise in einem Bereich von 100kHz-205kHz.

Mit dem erfindungsgemäßen System können mittels induktiver Kopplung Leistungen vorzugsweise im Bereich größer 50 Watt übertragen werden.

Schnittstellen zur induktiven Kopplung werden in Kraftfahrzeugen üblicherweise zum Laden von Smartphones verbaut. Alternativ können derartige Schnittstellen Kraftfahrzeugseitig auch nachgerüstet werden.

Die drahtlose Energieübertragung ermöglicht eine komfortable Handhabung, da keine Kabelverbindung zwischen der Energieversorgungsquelle und Endgerät hergestellt werden muss. Auch sind Energieversorgungsquelle und Endgerät isoliert gegeneinander und können jeweils in vollständig geschlossenen Gehäusen untergebracht werden. Des Weiteren kann auf zueinander kompatible Steckverbindungen verzichtet werden.

Gemäß einer vorteilhaften Ausführungsform ist vorgesehen, dass das Mittel zur drahtlosen Energieübertragung eine Empfängerspule umfasst. Kraftfahrzeugseitig ist dementsprechend eine Senderspule vorgesehen. Zur induktiven Energieübertragung wird senderseitig ein magnetisches Wechselfeld erzeugt. Die Übertragung erfolgt mittels der Gegeninduktion zwischen der Sender- und der Empfängerspule. In der Empfängerspule wird eine Wechselspannung induziert. Der Abstand zwischen den beiden Spulen stellt die drahtlose Übertragungsstrecke dar und sollte möglichst gering sein - typisch sind einige wenige Zentimeter bis zu einigen 10 cm Abstand.

Um die Reichweite der induktiven Kopplung zu vergrößern, kann gemäß einer weiteren vorteilhaften Ausführungsform vorgesehen werden, dass das Mittel zur drahtlosen Energieübertragung wenigstens einen Resonanzkreis umfasst. Zwischen Sender- und Empfängerspule sind ein oder mehrere freie Schwingkreise angebracht. Ein Schwingkreis besteht aus einem Kondensator und einer Spule, deren Resonanzfrequenz auf die Übertragungsfrequenz abgeglichen ist. Die Resonanz zwischen den Schwingkreisen führt zu einer verbesserten magnetischen Kopplung zwischen Sender- und Empfängerspule bei der Übertragungsfrequenz. Dabei sollten die Schwingkreise einen möglichst hohen Gütefaktor aufweisen. Folge davon sind eine größere Reichweite und ein besserer Wirkungsgrad. Eine drahtlose Energieübertragung ist damit über eine Distanz in der Größenordnung des 4- bis 10-fachen Spulendurchmessers möglich. Bei der Verwendung von Resonanzkreisen erfolgt die Energieübertragung mittels resonant, induktiver Kopplung.

Weiter kann vorgesehen sein, dass das Mittel wenigstens eine elektrische Schaltung zum Koppeln des Elektromotors mit der Empfängerspule umfasst.

Es kann sich als vorteilhaft erweisen, dass die elektrische Schaltung einen Umrichter oder einen Gleichrichter umfasst, beispielsweise einen AC/DC-Wandler. Beispielsweise kann damit vorteilhafterweise die induzierte Wechselspannung auf eine Betriebsspannung des Elektromotors angepasst werden.

Gemäß einer vorteilhaften Ausführungsform ist vorgesehen, dass das Mittel zur drahtlosen Energieübertragung in eine Versorgungsplatte und/oder ein Versorgungspad integriert ist oder eine Versorgungsplatte und/oder ein Versorgungspad umfasst integriert ist.

Weiter ist vorgesehen, dass Mittel zur drahtlosen Energieübertragung außerhalb eines, insbesondere den Kompressor und den Elektromotor aufnehmenden, Gehäuse des Druckluftbereitstellungssystems angeordnet ist, wobei das Mittel über eine Energieversorgungsleitung, insbesondere über ein Kabel, mit dem Kompressor, insbesondere mit dem Elektromotor verbindbar oder verbunden ist.

Gemäß einer weiteren Ausführungsform kann vorgesehen sein, dass das Druckluftbereitstellungssystem eine Druckluftauslassöffnung umfasst, wobei die Druckluftauslassöffnung direkt oder über einen Dichtflüssigkeitsbehälter mit einem abzudichtenden und/oder aufzupumpenden Luftreifen verbindbar ist.

Diese und weitere Merkmale der Erfindung ergeben sich auch aus der nachfolgenden Beschreibung sowie der Zeichnung und den Ansprüchen.

Die Erfindung wird im Folgenden anhand einer Zeichnung näher erläutert. Dabei zeigen:
- Fig. 1: eine schematische Darstellung eines Druckluftbereitstellungssystems mit einem Dichtflüssigkeitsbehälter und einem Reifen;
- Fig. 2: eine schematische Darstellung eines erfindungsgemäßen Druckluftbereitstellungssystems;
- Fig. 3: eine schematische Darstellung eines erfindungsgemäßen Druckluftbereitstellungssystems gemäß einer weiteren Ausführungsform, und
- Fig. 4: eine schematische Darstellung eines erfindungsgemäßen Druckluftbereitstellungssystems gemäß einer weiteren Ausführungsform.

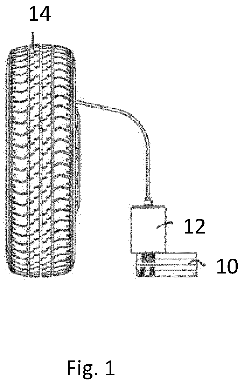

Figur 1 zeigt eine schematische Darstellung eines Druckluftbereitstellungssystems 10, das über einen Dichtflüssigkeitsbehälter 12 mit einem abzudichtenden bzw. aufzupumpenden Luftreifen 14 verbunden ist. Der Dichtflüssigkeitsbehälter 12 ist gemäß der Darstellung unmittelbar mit dem Druckluftbereitstellungssystem 10 gekoppelt. Alternativ kann der Dichtflüssigkeitsbehälter 12 auch über ein weiteres nicht dargestelltes Verbindungselement mit dem Druckluftbereitstellungssystem 10 verbunden werden kann. Bei Systemen gemäß der dargestellten Ausführungsform wird Druckluft zum Eintrag von Dichtflüssigkeit sowie zusätzliche Druckluft zu Verteilung der Dichtflüssigkeit in dem Luftreifen durch das Druckluftbereitstellungssystem 10 bereitgestellt, wobei die Druckluft durch den Dichtflüssigkeitsbehälter 12 hindurchgeleitet wird.

Alternativ kann das Druckluftbereitstellungssystem 10 auch direkt mit dem aufzupumpenden Luftreifen 14 verbunden werden.

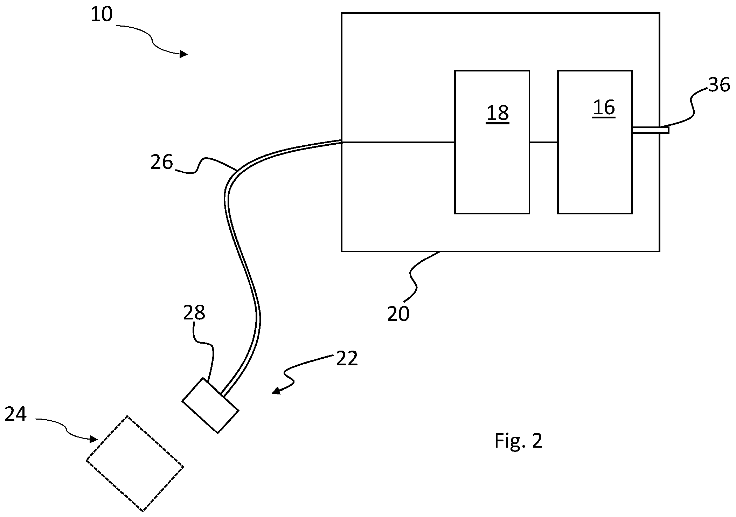

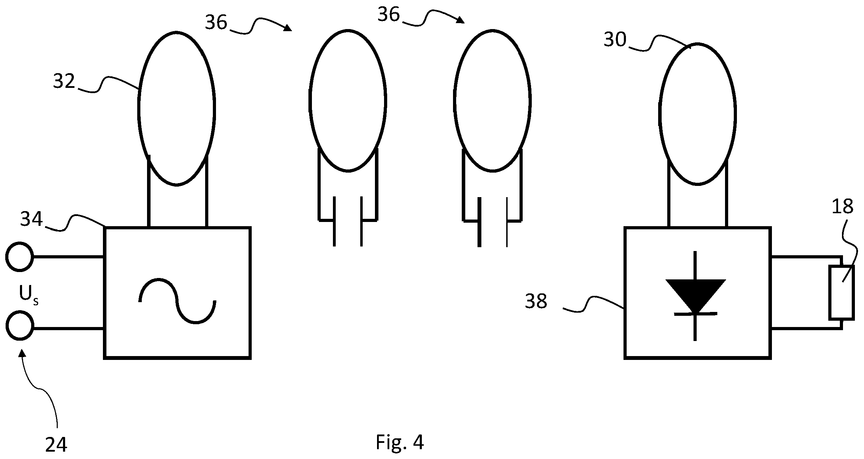

Das Druckluftbereitstellungssystem 10 wird im Folgenden unter Bezugnahme auf die Figuren 2 bis 4 erläutert.

Das Druckluftbereitstellungssystem 10 umfasst einen Kompressor 16 und einem Elektromotor 18, insbesondere zum Antreiben eines Verdichters des Kompressors 16. Gemäß der dargestellten Ausführungsform ist sind der Kompressor 16 und der Elektromotor 18 in einem Gehäuse 20 des Druckluftbereitstellungssystems 10 aufgenommen.

Weiter umfasst das Druckluftbereitstellungssystem 10 einen Mittel 22 zum Verbinden des Druckluftbereitstellungssystems 10, insbesondere des Elektromotors 18, mit einer Energieversorgungsquelle 24 zum Versorgen des, Druckluftbereitstellungssystems 10, insbesondere des Elektromotors 18, mit elektrischer Energie.

Das Mittel 22 des Druckluftbereitstellungssystems 10 ist als Mittel 22 zur drahtlosen Energieübertragung ausgebildet.

Die Energieversorgungsquelle 24 umfasst dementsprechend ebenfalls Mittel zur drahtlosen Energieübertragung. Derartige Schnittstellen werden in Kraftfahrzeugen üblicherweise zum Laden von Smartphones verbaut.

Das Mittel 22 zur drahtlosen Energieübertragung umfasst eine Versorgungsplatte 28 bzw. ein Versorgungspad. Unter Versorgungsplatte 28 bzw. Versorgungspad wird der Gehäuse ferne Teil 28 des Druckluftbereitstellungssystems 10 verstanden, der über eine Energieversorgungsleitung, insbesondere über ein Kabel 26, mit dem Kompressor, insbesondere mit dem Elektromotor verbindbar oder verbunden ist.

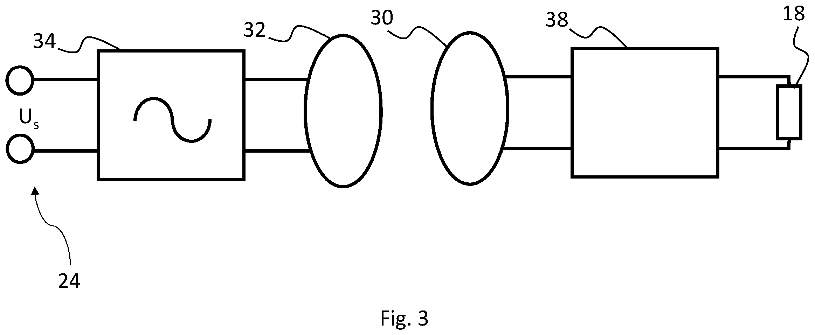

Das Mittel 22 zur drahtlosen Energieübertragung umfasst eine Empfängerspule 30, vgl. Fig. 3. Kraftfahrzeugseitig ist dementsprechend eine Senderspule 32 vorgesehen. Zur induktiven Energieübertragung wird senderseitig ein magnetisches Wechselfeld, insbesondere mittels eines Oszillators 34 erzeugt. Die Übertragung erfolgt mittels der Gegeninduktion zwischen der Sender- und der Empfängerspule 30, 32. In der Empfängerspule 30 wird eine Wechselspannung induziert. Der Abstand zwischen den beiden Spulen 30, 32 stellt die drahtlose Übertragungsstrecke dar und sollte möglichst gering sein - typisch sind einige wenige Zentimeter bis zu einigen 10 cm Abstand.

Um die Reichweite der induktiven Kopplung zu vergrößern kann gemäß einer weiteren vorteilhaften Ausführungsform vorgesehen werden, dass das Mittel zur drahtlosen Energieübertragung wenigstens einen Resonanzkreis 36 umfasst. Gemäß der dargestellten Ausführungsform ist sowohl sender- als auch empfängerseitig ein Resonanzkreis vorgesehen. Ein Schwingkreis besteht aus einem Kondensator und einer Spule, deren Resonanzfrequenz auf die Übertragungsfrequenz abgeglichen ist. Die Resonanz zwischen den Schwingkreisen 36 führt zu einer verbesserten magnetischen Kopplung zwischen Sender- und Empfängerspule 30, 32 bei der Übertragungsfrequenz.

Empfängerseitig ist weiter eine elektrische Schaltung 38 zum Koppeln des Elektromotors 18 mit der Empfängerspule 30 vorgesehen.

Die elektrische Schaltung 38 umfasst beispielsweise einen Umrichter oder einen Gleichrichter. Beispielsweise kann damit vorteilhafterweise die induzierte Wechselspannung auf eine Betriebsspannung des Elektromotors 18 angepasst werden.

## Patentansprüche

1. Druckluftbereitstellungssystem (10), insbesondere zum Bereitstellen von Luft für Reifen (14) eines Kraftfahrzeugs, wobei das Druckluftbereitstellungssystem (10) mit einem abzudichtenden und/oder aufzupumpenden Luftreifen verbindbar ist, umfassend einen Kompressor (16) mit einem Elektromotor (18), insbesondere zum Antreiben eines Verdichters des Kompressors (16), wobei das Druckluftbereitstellungssystem (10) Mittel (22) zum Verbinden des Druckluftbereitstellungssystems (10), insbesondere des Elektromotors (18), mit einer Energieversorgungsquelle (24) zum Versorgen des Elektromotors (18) mit elektrischer Energie vorgesehen ist, wobei die elektrische Energie mittels der Mittel (22) direkt an den Elektromotor (18) übertragen wird, wobei das Mittel (22) Mittel zur drahtlosen Energieübertragung umfasst, **dadurch gekennzeichnet, dass** das Mittel (22) außerhalb eines, insbesondere den Kompressor (16) und den Elektromotor (18) aufnehmenden, Gehäuse (20) des Druckluftbereitstellungssystems (10) angeordnet ist, wobei das Mittel (22) über eine Energieversorgungsleitung, insbesondere über ein Kabel (26), mit dem Kompressor, insbesondere mit dem Elektromotor verbindbar oder verbunden ist.

2. Druckluftbereitstellungssystem (10) nach Anspruch 1, **dadurch gekennzeichnet, dass** das Mittel (22) eine Empfängerspule (30) umfasst.

3. Druckluftbereitstellungssystem (10) nach einem der Ansprüche 1 oder 2, **dadurch gekennzeichnet, dass** das Mittel (22) wenigstens einen Resonanzkreis umfasst.

4. Druckluftbereitstellungssystem (10) nach Anspruch 2 oder 3, **dadurch gekennzeichnet, dass** das Mittel (22) wenigstens eine elektrische Schaltung zum Koppeln des Elektromotors (18) mit der Empfängerspule (30) umfasst.

5. Druckluftbereitstellungssystem (10) nach Anspruch 4, **dadurch gekennzeichnet, dass** die elektrische Schaltung einen Umrichter oder einen Gleichrichter umfasst.

6. Druckluftbereitstellungssystem (10) nach einem der vorhergehenden Ansprüche, **dadurch gekennzeichnet, dass** das Mittel (22) in eine Versorgungsplatte (28) und/oder ein Versorgungspad (28) integriert ist oder eine Versorgungsplatte (28) und/oder ein Versorgungspad (28) umfasst.

7. Druckluftbereitstellungssystem (10) nach wenigstens einem der vorhergehenden Ansprüche 1 bis 6, **dadurch gekennzeichnet, dass** das Druckluftbereitstellungssystem (10) eine Druckluftauslassöffnung (36) umfasst, wobei die Druckluftauslassöffnung (36) direkt oder über einen Dichtflüssigkeitsbehälter (12) mit einem abzudichtenden und/oder aufzupumpenden Luftreifen (14) verbindbar ist.

## Claims

1. A compressed-air providing system (10), in particular for providing air for tires (14) of a motor vehicle, wherein the compressed-air providing system (10) can be connected to a pneumatic tire (14) to be sealed and/or pumped up, comprising a compressor (16) having an electric motor (18), in particular for driving a compressing unit of the compressor (16), wherein the compressed-air providing system (10) is provided with means (22) for connecting the compressed-air providing system (10), in particular the electric motor (18), to an energy supply source (24) for supplying the electric motor (18) with electrical energy, wherein the electrical energy is transmitted directly to the electric motor (18), **wherein** the means (22) comprises means for wireless transmission of energy, **characterized in that** the means (22) is arranged outside of a housing (20) of the compressed-air providing system (10), which housing in particular receives the compressor (16) and the electric motor (18), wherein the means (22) can be connected or is connected via an energy supply line, in particular via a cable (26), to the compressor, in particular to the electric motor.

2. The compressed-air providing system (10) according to claim 1, **characterized in that** the means (22) comprises a receiver coil (30).

3. The compressed-air providing system (10) according to any one of claims 1 or 2, **characterized in that** the means (22) comprises at least one resonant circuit.

4. The compressed-air providing system (10) according to any one of the preceding claims, **characterized in that** the means (22) comprises at least one electrical circuit for coupling the electric motor (18) to the receiver coil (30).

5. The compressed-air providing system (10) according to claim 4, **characterized in that** the electrical circuit comprises a converter or a rectifier.

6. The compressed-air providing system (10) according to any one of the preceding claims, **characterized in that** the means (22) is integrated into a supply plate (28) and/or a supply pad (28) or comprises a supply plate (28) and/or a supply pad (28).

7. The compressed-air providing system (10) according to at least one of the preceding claims 1 to 6, **characterized in that** the compressed-air providing system (10) comprises a compressed-air outlet opening (36), wherein the compressed-air outlet opening (36) can be connected directly or via a sealing liquid container (12) to a pneumatic tire (14) to be sealed and/or pumped up.

## Revendications

1. Système de fourniture d'air comprimé (10), en particulier pour de fourniture d'air pour des pneumatiques (14) d'un véhicule automobile, dans lequel le système de fourniture d'air comprimé (10) peut être raccordé à un pneumatique à sceller et/ou à gonfler, comprenant un compresseur (16) équipé d'un moteur électrique (18), en particulier pour entraîner le compresseur (16), dans lequel le système de fourniture d'air comprimé (10) comprend des moyens (22) de raccordement du système de fourniture d'air comprimé (10), en particulier du moteur électrique (18), à une source d'alimentation en énergie (24) pour alimenter le moteur électrique (18) en énergie électrique, dans lequel l'énergie électrique est transmise directement au moteur électrique (18) par les moyens (22), dans lequel le moyen (22) comprend des moyens de transmission d'énergie sans fil, **caractérisé par le fait que** le moyen (22) est disposé à l'extérieur d'un boîtier (20) du système de fourniture d'air comprimé (10), qui, en particulier loge le compresseur (16) et le moteur électrique (18), dans lequel le moyen (22) peut être raccordé ou est raccordé au compresseur, en particulier au moteur électrique, via une ligne d'alimentation en énergie, en particulier via un câble (26).

2. Système de fourniture d'air comprimé (10) selon la revendication 1, **caractérisé par le fait que** le moyen (22) comprend une bobine réceptrice (30).

3. Système de fourniture d'air comprimé (10) selon l'une quelconque des revendications 1 ou 2, **caractérisé par le fait que** le moyen (22) comprend au moins un circuit résonant.

4. Système de fourniture d'air comprimé (10) selon la revendication 2 ou 3, **caractérisé par le fait que** le moyen (22) comprend au moins un circuit électrique pour coupler le moteur électrique (18) à la bobine réceptrice (30).

5. Système de fourniture d'air comprimé (10) selon la revendication 4, **caractérisé par le fait que** le circuit électrique comprend un convertisseur ou un redresseur.

6. Système de fourniture d'air comprimé (10) selon l'une quelconque des revendications précédentes, **caractérisé par le fait que** le moyen (22) est intégré à une plaque d'alimentation (28) et/ou à un pad d'alimentation (28) ou comprend une plaque d'alimentation (28) et/ou un pad d'alimentation (28).

7. Système de fourniture d'air comprimé (10) selon au moins l'une quelconque des revendications précédentes 1 à 6, **caractérisé par le fait que** le système de fourniture d'air comprimé (10) comprend une ouverture de sortie d'air comprimé (36), dans lequel ladite ouverture de sortie d'air comprimé (36) peut être reliée directement ou via un réservoir de fluide d'étanchéité (12) à un pneumatique (14) à sceller et/ou à gonfler.
